# EUROPÄISCHE PATENTSCHRIFT

(11) **EP 1 120 873 B1**
(45) Veröffentlichungstag und Bekanntmachung des Hinweises auf die Patenterteilung: **23.03.2011**
(21) Anmeldenummer: 00127504.9
(22) Anmeldetag: 15.12.2000
(51) Int. Cl.: H02B 1/056, H02B 1/052

(54) **Halterungseinrichtung zur Befestigung wenigstens eines elektrischen Schaltgerätes auf einer Hutprofiltragschiene**
Supporting device for the fixation of at least one electrical apparatus on a DIN rail
Dispositif de support pour le montage d'au moins un appareil électrique sur un rail DIN

(30) Priorität: 27.01.2000 DE 10003349
(43) Veröffentlichungstag der Anmeldung: 01.08.2001
(73) Patentinhaber: ABB AG, 68309 Mannheim (DE)
(72) Erfinder: Schollenberger, Lothar, 69493 Hirschberg (DE)

(56) Entgegenhaltungen:
- DE-A- 19 738 705
- DE-C- 19 809 293

## Beschreibung

Die Erfindung betrifft eine Halterungseinrichtung zur Befestigung wenigstens eines elektrischen Schaltgerätes, insbesondere Leitungsschutzschalters, Motorschutzschalters, Fehlerstromschutzschalters und dgl. auf einer Hutprofiltragschiene.

Elektrische Schaltgeräte, die in einer Verteilung oder in einer Schaltanlage eingebaut sind, sind im allgemeinen auf einer Hutprofiltragschiene aufgerastet. Zu diesem Zweck besitzt das einzelne Schaltgerät an seiner Befestigungsseite eine Ausnehmung mit einer feststehenden und einer beweglichen Nase, die sich gegenüberliegen, wobei die bewegliche Nase mittels einer Feder in Richtung auf die feststehende Nase gedrückt wird. Zur Montage wird das Schaltgerät mit der feststehenden Nase über eine Kante der Hutprofiltragschiene eingehängt; danach wird es um diese Kante verschwenkt, so daß die Nase hinter die andere der Hutprofiltragschiene schnappt.

Nebeneinander aufgereihte Schaltgeräte können auf der Zugangsseite mit einer Stromsammelschiene oder einem Stromsammelschienenblock verbunden sein, was dann ein Problem bringt, wenn eines der Schaltgeräte defekt oder falsch dimensioniert ist und ausgetauscht werden soll. In diesem Fall wäre die Sammelschiene oder der Sammelschienenblock in der Verteilung zu lösen, so daß das Schaltgerät in üblicher Weise demontiert werden kann. Dies bedeutet aber, daß die benachbarten Schaltgeräte und ggf. damit verbundene Netze abzuschalten sind.

Insbesondere bei Leitungs- und Fehlerstromschutzschaltern ist bekannt, die Ausnehmung im Bereich der beweglichen Nase so auszugestalten, daß das Schaltgerät quer zur Hutprofiltragschiene verschoben werden kann, so daß es von der Sammelschiene oder vom Sammelschienenblock frei kommt und entfernt werden kann. In diesem Fall brauchen die anderen Schaltgeräte nicht mehr abgeschaltet zu werden.

Bei Motorschutzschaltern sind derartige Lösungen nicht bekannt. Darüber hinaus werden Motorschutzschalter häufig mit Schützen gekuppelt, was die Demontage eines einzelnen Schaltgerätes, d. h. eines einzelnen Motorschutzschalters erschwert.

Aus der DE 197 38 706 A1 ist ein System bekannt, bei dem die Installationsschaltgeräte auf einer Trageschiene befestigt werden und zusammen mit der Trageschiene senkrecht zur Befestigungsebene in einen Schaltschrank einführbar sind.

Aus der DE 198 09 293 C2 ist eine Schutzeinrichtung für ein Elektroenergiesystem bekannt, bei dem eine Sensoreinheit und eine mit einem Anzeigefeld versehene elektronische Auswerteeinheit zusammen auf einer Hutschiene befestigbar sind. An dem Gehäuse der Sensoreinheit ist eine umlaufende Tragschiene angeordnet, derart, dass das Gehäuse der Auswerteeinheit mittels einer Schnappverbindung in zwei um 90° gedrehten Positionen an der Trageschiene befestigbar ist.

Aufgabe der Erfindung ist es, eine Halterungseinrichtung der eingangs genannten Art zu schaffen, mit dem die Demontage eines Schaltgerätes erleichtert ist.

Diese Aufgabe wird erfindungsgemäß gelöst durch die Merkmale des Anspruches 1. erfindungsgemäß weist die Halterungseinrichtung ein auf der Hutprofiltragschiene aufschnappbares Unterteil auf, an dem das Schaltgerät in einer Richtung quer zum Verlauf der Hutprofiltragschiene verschiebbar gelagert ist.

Aufgrund der verschiebbaren Lagerung kann das Schaltgerät von der Sammelschiene freikommen und ohne Abschalten der benachbarten Schaltgeräte demontiert werden.

Dabei kann das Schaltgerät unmittelbar am Unterteil verschiebbar gelagert sein.

Gemäß einer weiteren Ausführungsform kann die Halterung ein Oberteil aufweisen, auf dem das Schaltgerät befestigbar und das im Unterteil verschiebbar gelagert ist.

Gemäß einer weiteren Ausgestaltung der Erfindung besitzt das Unterteil eine quaderförmige Napfform, an dessen quer zur Hutprofiltragschiene und senkrecht zur Befestigungsebene verlaufenden Seitenwänden innen Rillen vorgesehen sind, in denen das Oberteil verschiebbar geführt ist.

Dabei besteht die Möglichkeit, daß das Oberteil zwei Teilabschnitte umfaßt, die unabhängig voneinander verschiebbar sind.

Gemäß einer besonders vorteilhaften Ausgestaltung der Erfindung ist das Oberteil durch ein oder zwei Leiterplattenabschnitte gebildet.

Anhand der Zeichnung, in der eine Ausführungsform der Erfindung dargestellt ist, sollen die Erfindung sowie weitere vorteilhafte Ausgestaltungen und Verbesserungen der Erfindung näher erläutert und beschrieben werden.

Es zeigen:
Fig. 1 eine perspektivische Darstellung der Halterungseinrichtung, und
Fig. 2 eine perspektivische Ansicht auf zwei mit einer Sammelschiene verbundene Schaltgeräte.

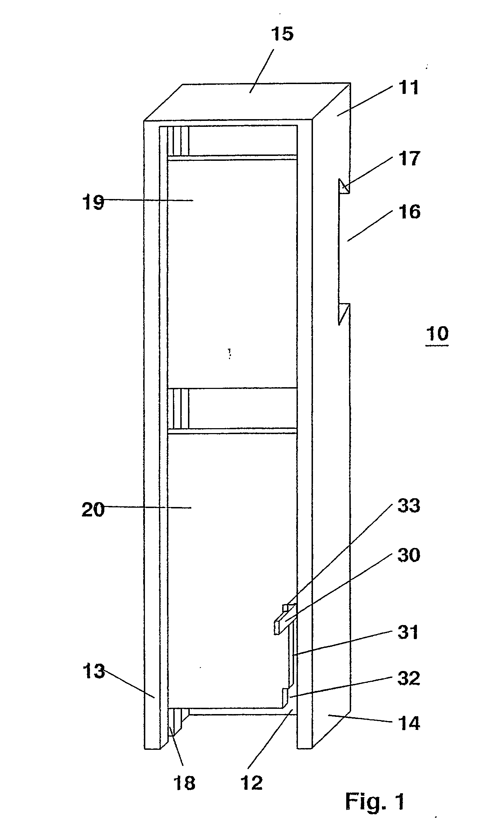

Es sei nun Bezug genommen auf die Fig. 1.

Die Halterungseinrichtung 10 besitzt ein napfförmiges Gehäuseunterteil 11 mit einer rechteckigen Bodenwand 12, an deren Längskanten Seitenwände 13 und 14 angeformt sind, die an einer Querkante mittels einer Querwand 15 verbunden sind. Im Bereich der Querwand 15 befindet sich auf der Außenfläche der Bodenwand 12 eine Ausnehmung 16, die eine feststehende Nase 17 aufweist; die bewegbare Nase, wie sie bei jedem Schaltgerät vorhanden ist, ist in der Fig. 1 nicht sichtbar.

An den sich gegenüberliegenden Innenflächen der Seitenwände 13 und 14 ist jeweils eine Rille 18 vorgesehen, die parallel zur Längskante der Bodenwandung 12 verlaufen; die gegenüberliegende Rille in der Seitenwand 14 ist nicht sichtbar.

In die Rillen 18 sind zwei Platten 19 und 20 eingeschoben, die als Oberteil dienen. Dabei besteht die Möglichkeit, daß auch eine einheitliche Platte vorgesehen ist.

Auf der Platte 19 ist ein Motorschutzschalter 21 befestigt, an dem ein auf der Platte 20 befestigtes Schütz 22 angeschlossen ist.

Auf der Platte 20 sind Anschlußelemente 23 und 24 vorgesehen; am Anschlußelement 23 schließen zu einem abzusichernden Motor verlaufende Anschlußleitungen an, wogegen am Anschlußelement 24 Steuerleitungen anschließen können.

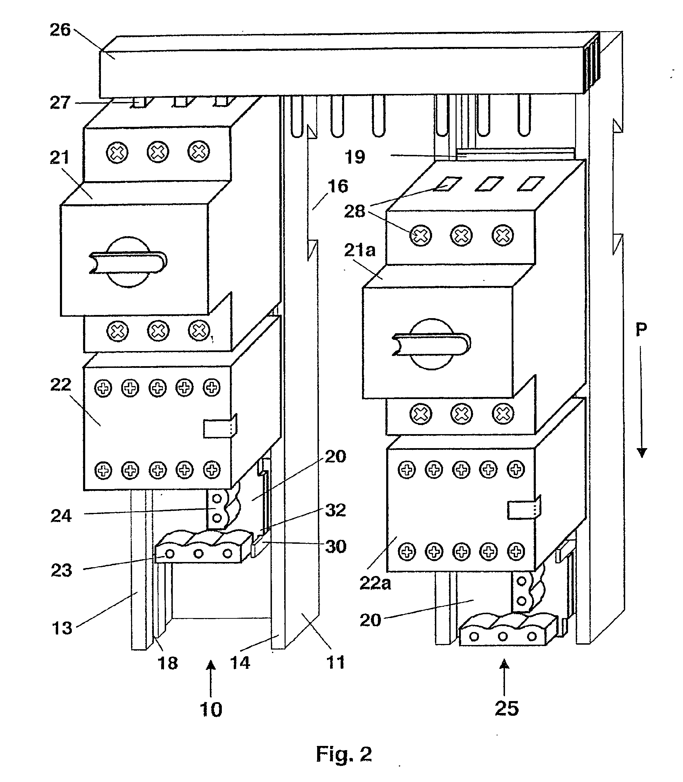

Die Fig. 2 zeigt zwei nebeneinander angeordnete Halterungseinrichtungen 10 und 25, sowie quer dazu eine Sammelschienenanordnung 26, aus der Anschlußfahnen 27 herausragen, die entsprechenden Phasenleitern innerhalb der Sammelschienenanordnung 26 zugeordnet sind, so daß über die Anschlußfahnen 27 die Sammelschienenanordnung mit den jeweiligen Phasen mit den Motorschutzschaltern 21, 21 a verbunden werden.

Wenn nun beispielsweise der Motorschutzschalter 21 a demontiert werden soll, dann werden die Anschlußklemmen 28 von den Anschlußfahnen 27 gelöst, und die Platten 19 und 20 können dann in Pfeilrichtung P verschoben werden, so daß die Anschlußklemmen des Motorschutzschalters 21 a von den Anschlußfahnen freikommen.

Am Unterteil ist, wie aus Fig. 1 ersichtlich, ein federnder Arm 30 angeformt, der als Rasteinrichtung dient. Hierzu ist an der Platte 20 eine Aussparung 31 vorgesehen, die eine zur freien Endkante der Platte 20 gelegene Stufung 32 und eine in Richtung zur anderen Endkante gelegene Vertiefung 33 besitzt. Der Arm 30 greift in die Vertiefung 33 ein, so daß damit die Platten 19 und 20 in derjenigen Stellung festgerastet sind, in der der Motorschutzschalter 21 a von den Anschlußfahnen frei ist. Wenn der ausgetauschte Motorschutzschalter mit der Sammelschienenanordnung 26 in Verbindung gebracht werden soll, wird der Arm 30 senkrecht zu den Längskanten der Bodenwandung 12 verbogen, so daß er aus der Ausnehmung 33 herausgelangt und die Platte 20 entgegen der Pfeilrichtung P verschoben werden kann. Wenn der Arm 30 hinter die Stufung 32 schnappt, siehe Fig. 2 in der Stellung des Motorschutzschalters 21, dann sind die Platten 19, 20 festgelegt.

Die Platten 19 und 20 sind getrennt voneinander bewegbar und bilden damit das Oberteil, auf dem der Motorschutzschalter 21 zusammen mit dem Schütz 22 befestigt ist. Dabei sind der Motorschutzschalter auf der Platte 19 und das Schütz 22 auf der Platte 20 befestigt, so daß im Bedarfsfall auch das Schütz 22 unabhängig vom Motorschutzschalter 21 dadurch demontiert werden kann, daß die Platte 20 verschoben wird.

Wie der Motorschutzschalter bzw. das Schütz 22 auf den Platten 19, 20 befestigt ist, ist für die Erfindung nicht von Bedeutung. Es besteht beispielsweise die Möglichkeit, auf den Platten 19 und 20 Teilstücke einer Hutprofiltragschiene zu befestigen, auf denen der Motorschutzschalter 21 und das Schütz 22 festgerastet sein können.

Im Normalfall sind die beiden Platten 19, 20 einstückig miteinander verbunden. In Sonderfällen aber, wenn unterschiedliche Motorschutzschalter 21, 21 a eingesetzt werden sollen, wobei das Schütz und das Anschlußteil 24, das ein Busanschluß sein kann, unverändert bleiben, sind die Platten 19, 20 getrennt, und es können in der ausgefahrenen Stellung (Fig. 2, rechts) die beiden Schaltgeräte 21 a, 22a voneinander getrennt werden, in dem in dieser Stellung der Motorschutzschalter nach oben gefahren wird, bis er von den Anschlußfahnen des Schützes 22a freigekommen ist. Danach kann der Motorschutzschalter 21a unabhängig vom Schütz 22a demontiert und durch einen neuen Motorschutzschalter ersetzt werden.

## Patentansprüche

1. Halterungseinrichtung zur Befestigung wenigstens eines elektrischen Schaltgerätes, insbesondere eines Motorschutzschalters, eines Schützes, eines Leitungsschutz- oder Fehlerstromschutzschalters und dgl. auf einer Hutprofiltragschiene, **dadurch gekennzeichnet, daß** die Halterungseinrichtung (10, 25) ein auf der Hutprofiltragschiene aufschnappbares Unterteil (11) aufweist, an dem das Schaltgerät (21, 22) in der Befestigungsebene in einer Richtung quer zum Verlauf der Hutprofiltragschiene verschiebbar gelagert ist.

2. Halterungseinrichtung nach Anspruch 1, **dadurch gekennzeichnet, daß** das Schaltgerät (21, 22) unmittelbar am Unterteil (11) verschiebbar gelagert ist.

3. Halterungseinrichtung nach Anspruch 1, **dadurch gekennzeichnet, daß** ein Oberteil, auf dem das Schaltgerät befestigbar ist, vorgesehen ist, das im Unterteil (11) verschiebbar gelagert ist.

4. Halterungseinrichtung nach Anspruch 3, **dadurch gekennzeichnet, daß** das Unterteil (11) eine quaderförmige Napfform besitzt, an dessen quer zur Hutprofiltragschiene und senkrecht zur Befestigungsebene verlaufenden Seitenwänden (13, 14) Rillen oder Nuten (18) vorgesehen sind, in denen das Oberteil (19, 20) verschiebbar geführt ist.

5. Halterungseinrichtung nach einem der Ansprüche 3 und 4, **dadurch gekennzeichnet, daß** das Oberteil (19, 20) zwei Oberteilabschnitte aufweist, die unabhängig voneinander verschiebbar sind.

6. Halterungseinrichtung nach einem der Ansprüche 3 bis 5, **dadurch gekennzeichnet, daß** das Oberteil wenigstens einen Träger in Form von vorzugsweise einer Hutprofiltragschiene zur Fixierung des Schaltgerätes (21, 22) aufweist.

7. Halterungseinrichtung nach einem der vorherigen Ansprüche, **dadurch gekennzeichnet, daß** eine Rasteinrichtung vorgesehen ist, mit der das Schaltgerät oder das Oberteil in zwei Stellungen festrastbar ist.

8. Halterungseinrichtung nach Anspruch 7, **dadurch gekennzeichnet, daß** die Rasteinrichtung durch einen federnd am Unterteil (11) angeformten Rastarm (30) gebildet ist, der in der Stellung, wenn das Schaltgerät mit einer Sammelschienenanordnung in Verbindung steht, und in der anderen Stellung, in der das Schaltgerät außer Eingriff mit der Sammelschienenanordnung steht, das Oberteil bezogen auf das Unterteil festlegt.

9. Halterungseinrichtung nach Anspruch 8, **dadurch gekennzeichnet, daß** am Oberteil zwei in Abstand zueinander angeordnete Stufungen (33, 32) angeordnet sind, hinter die der Rastarm in der jeweiligen Stellung greift.

10. Halterungseinrichtung nach Anspruch 1, **dadurch gekennzeichnet, dass** passende Befestigungslöcher vorhanden sind, die die Befestigung auf Trägern für rückseitige Stromschienensysteme ermöglichen, die hinter den Schaltgeräten aufgebaut sind.

## Claims

1. A fixing device for fixing at least one electric switching device to a hat-profile support rail, especially a motor circuit breaker, contactor, miniature circuit breaker, residual-current circuit breaker and the like, **characterized in that** the fixing device (10, 25) comprises a bottom part (11) which can be snap-fitted onto the hat-profile support rail and on which the switching device (21, 22) is displaceably mounted in the fixing plane in a direction transversally to the progression of the hat-profile support rail.

2. A fixing device according to claim 1, **characterized in that** the switching device (21, 22) is displaceably mounted directly to the bottom part (11).

3. A fixing device according to claim 1, **characterized in that** an upper part is provided, on which the switching device can be fixed and which is displaceably held in the bottom part (11).

4. A fixing device according to claim 3, **characterized in that** the bottom part (11) has a cuboid-like cup shape where flutes or grooves (18) are provided on its side walls (13, 14) extending transversally to the hat-profile support rail and perpendicularly to the fixing plane, in which flutes or grooves the upper part (19, 20) is displaceably guided.

5. A fixing device according to one of the claims 3 and 4, **characterized in that** the upper part (19, 20) comprises two upper part sections which are displaceable independently from one another.

6. A fixing device according to one of the claims 3 to 5, **characterized in that** the upper part comprises at least one support in form of preferably one hat-profile support rail for fixing the switching device (21, 22).

7. A fixing device according to one of the preceding claims, **characterized in that** a locking device is provided with which the switching device or the upper part can be tightly fixed in two positions.

8. A fixing device according to claim 7, **characterized in that** the locking device is formed by a locking arm (30) formed resiliently on the bottom part (11), which locking arm fixes the upper part relative to the bottom part in the position when the switching device is in connection with a busbar arrangement and in the other position in which the switching device is out of engagement with the busbar arrangement.

9. A fixing device according to claim 8, **characterized in that** two stepped portions (33, 32) are arranged at a distance from one another on the upper part, behind which the locking arm engages in the respective position.

10. A fixing device according to claim 1, **characterized in that** matching fixing holes are provided which enable the fixing on supports for rear-side conductor bar systems which are arranged behind the switching devices.

## Revendications

1. Dispositif de monture pour la fixation d'au moins un appareil de commutation électrique, en particulier d'un disjoncteur de protection de moteur, d'un contacteur, d'un disjoncteur de protection de ligne ou à courant de fuite ou similaire sur un rail porteur à profil oméga, **caractérisé en ce que** le dispositif de monture (10, 25) présente une partie inférieure (11) pouvant être emboîtée sur le rail porteur à profil oméga et sur laquelle l'appareil de commutation (21, 22) est supporté avec possibilité de translation dans le plan de fixation dans une direction perpendiculaire à l'orientation du rail porteur à profil oméga.

2. Dispositif de fixation selon la revendication 1, **caractérisé en ce que** l'appareil de commutation (21, 22) est supporté avec possibilité de translation directement sur la partie inférieure (11).

3. Dispositif de fixation selon la revendication 1, **caractérisé en ce qu'**il est prévu une partie supérieure sur laquelle l'appareil de commutation peut être fixé et qui est supporté avec possibilité de translation dans la partie inférieure (11).

4. Dispositif de fixation selon la revendication 3, **caractérisé en ce que** la partie inférieure (11) a une forme d'auge carrée dont les parois latérales (13, 14) transversales par rapport au rail porteur à profil oméga et perpendiculaires au plan de fixation présentent des rainures ou des gorges (18) dans lesquelles la partie supérieure (19, 20) est guidée avec possibilité de translation.

5. Dispositif de fixation selon l'une des revendications 3 et 4, **caractérisé en ce que** la partie supérieure (19, 20) présente deux segments de partie supérieure qui peuvent être déplacés indépendamment l'un de l'autre.

6. Dispositif de fixation selon l'une des revendications 3 à 5, **caractérisé en ce que** la partie supérieure présente au moins un support sous la forme d'un rail porteur à profil oméga de préférence pour la fixation de l'appareil de commutation (21, 22).

7. Dispositif de fixation selon l'une des revendications précédentes, **caractérisé en ce qu'**il est prévu un dispositif d'encliquetage par lequel l'appareil de commutation ou la partie supérieure peut être bloqué dans deux positions.

8. Dispositif de fixation selon la revendication 7, **caractérisé en ce que** le dispositif d'encliquetage est formé par un bras d'encliquetage (30) formé de façon élastique sur la partie inférieure (11), qui fixe la partie supérieure par rapport à la partie inférieure dans une position quand l'appareil de commutation est relié à une disposition de barre collectrice et dans l'autre position dans laquelle l'appareil de commutation n'est pas en prise avec la disposition de barre collectrice.

9. Dispositif de fixation selon la revendication 8, **caractérisé en ce que** deux gradins (33, 32) disposés à distance l'un de l'autre, derrière lesquels le bras d'encliquetage se met en prise dans chaque position, sont disposés sur la partie supérieure.

10. Dispositif de fixation selon la revendication 1, **caractérisé en ce que** sont prévus des trous de fixation adéquats qui permettent la fixation sur des supports pour les systèmes de barre collectrice en face arrière qui sont montés derrière les appareils de commutation.
